# EUROPÄISCHE PATENTSCHRIFT

(11) **EP 0 803 953 B1**
(45) Veröffentlichungstag und Bekanntmachung des Hinweises auf die Patenterteilung: **27.12.2000**
(21) Anmeldenummer: 97106047.0
(22) Anmeldetag: 12.04.1997
(51) Int. Cl.: H02G 15/04, H02G 3/06, H01R 4/64

(54) **Kabelverschraubung**
Cable gland
Presse-étoupe pour câble

(30) Priorität: 19.04.1996 DE 19615602
(43) Veröffentlichungstag der Anmeldung: 29.10.1997
(60) Teilanmeldung: 00110095.7
(73) Patentinhaber: U.I. LAPP GMBH & CO. KG, D-70565 Stuttgart (DE)
(72) Erfinder: Schwarz, Manfred, 72651 Weil der Stadt (DE); Drotleff, Rolf, 71069 Sindelfingen (DE)
(74) Vertreter: Hoeger, Stellrecht & Partner

(56) Entgegenhaltungen:
- EP-A- 0 093 524
- EP-A- 0 598 261
- EP-A- 0 704 940
- DE-C- 3 708 493
- GB-A- 2 233 838

## Beschreibung

Die Erfindung betrifft eine Kabelverschraubung umfassend einen mit einem Gehäuse verbindbaren Stutzen, eine in ein Inneres des Stutzens einsetzbare Dichtung sowie ein mit dem Stutzen verschraubbares Druckelement, welches auf die Dichtung im Sinne eines Anlegens derselben an ein durch die Kabelverschraubung hindurchführbares Kabel einwirkt, und ein in dem Stutzen angeordnetes Schirmkontaktelement, welches in elektrischer Verbindung mit dem Stutzen steht und mittels eines in Richtung des hindurchführbaren Kabels reichenden Kontaktbügels einen einen Innenleiterbereich des Kabels umschließenden Kabelschirm mit einer ersten Kontaktstelle zu kontaktieren vermag.

Derartige Kabelverschraubungen sind aus der EP-A-0 093 524 bekannt. Bei diesen dient die Dichtung dazu, das Kabel einerseits dicht zu umschließen und außerdem das Schirmkontaktelement zu kontaktieren.

Der Nachteil derartiger Kabelverschraubungen besteht darin, daß ein Zusammenbau dieser Kabelverschraubungen aufwendig ist.

Der Erfindung liegt daher die Aufgabe zugrunde, eine Kabelverschraubung der gattungsgemäßen Art derart zu verbessern, daß das Schirmkontaktelement einfach montierbar ist.

Diese Aufgabe wird bei einer Kabelverschraubung der eingangs beschriebenen Art erfindungsgemäß dadurch gelöst, daß das Schirmkontaktelement unabhängig von der Dichtung von einem gehäuseseitigen Ende des Stutzens in diesen einsetzbar und in elektrischen Kontakt mit dem Stutzen bringbar ist und daß das Schirmkontaktelement in dem Stutzen lokal fixierbar ist.

Damit ist ein Zusammenbau der Kabelverschraubung völlig unabhängig von dem Vorhandensein oder Nichtvorhandensein des Schirmkontaktelements möglich. Insbesondere ist es in diesem Fall möglich, eine Kabelverschraubung einerseits mit einer Dichtung und dem auf diese wirkenden Druckelement zu montieren und je nach Einsatzzweck entweder mit dem Schirmkontaktelement einzusetzen oder nicht.

Erfindungsgemäß ist es außerdem zweckmäßig, daß das Schirmkontaktelement in einfacher Weise dazu ausgebildet werden kann, eine definierte Positionierung des Schirmkontaktelements in dem Stutzen zu erreichen.

Der Vorteil der erfindungsgemäßen Lösung ist ferner darin zu sehen, daß durch das im Stutzen angeordnete Schirmkontaktelement eine unmittelbare Verbindung zwischen dem Stutzen und dem den Innenleiterbereich des Kabel umschließenden Kabelschirm herstellbar ist, wobei der Kabelschirm hierzu nicht vom Innenleiterbereich des Kabels gelöst werden muß, sondern lediglich ein den Kabelschirm umgebender Kabelaußenmantel zu entfernen ist.

Mit dieser Lösung ist auch bei Kabeln mit unterschiedlichem Durchmesser in besonders einfacher Weise ein elektrischer Kontakt zwischen dem Kabelschirm und dem Stutzen herstellbar, nämlich dadurch, daß das Kabelende mit teilweise um den Kabelschirm entferntem Kabelaußenmantel lediglich in die Kabelverschraubung eingeführt werden muß und durch die Dichtung fixiert werden kann, wobei der Kontaktbügel auch bei unterschiedlicher vom Durchmesser der Kabel abhängiger Position des Kabelschirms eine zuverlässige Kontaktierung ermöglicht.

Besonders zweckmäßig ist es hierbei, wenn das Schirmkontaktelement über eine Rastverbindung am Stutzen fixierbar ist.

Das Schirmkontaktelement kann selbst direkt in dem Stutzen, beispielsweise durch lokales Fixieren des Trägerteils im Stutzen, gehalten sein.

Besonders vorteilhaft ist es jedoch, wenn das Schirmkontaktelement an einem in den Stutzen einführbaren Einsatzteil gehalten ist, da eine derartige Lösung den Vorteil aufweist, daß über das Einsatzteil in einfacher Weise eine Positionierung des Schirmkontaktelements im Stutzen erreichbar ist. Beispielsweise kann das Einsatzteil aus demselben Material oder aus anderem Material und in anderer Form ausgebildet sein als das Schirmkontaktelement, welches vorzugsweise aus entsprechend gebogenem metallischem Flachmaterial hergestellt ist.

Vorzugsweise ist beispielsweise das Einsatzteil ein Kunststoffteil.

Ein besonders einfaches Einsetzen des Einsatzteils, insbesondere unabhängig von der Dichtung, ist dann möglich, wenn das Einsatzteil von einem gehäuseseitigen Ende des Stutzens in diesen einsetzbar ist, da damit ein Zusammenbau der Kabelverschraubung völlig unabhängig von dem Vorhandensein oder Nichtvorhandensein des Einsatzteils möglich ist. Beispielsweise ist es in diesem Fall möglich, eine Kabelverschraubung einerseits mit einer Dichtung und dem auf diese wirkenden Druckelement zu montieren und je nach Einsatzzweck entweder das Einsatzteil mit dem Schirmkontaktelement einzusetzen oder nicht.

Besonders zweckmäßig ist es dabei, wenn das Schirmkontaktelement mittels des Einsatzteils in dem Stutzen lokal fixierbar ist, so daß das Einsatzteil in einfacher Weise dazu ausgebildet werden kann, eine definierte Positionierung des Schirmkontaktelements in dem Stutzen zu erreichen.

Besonders zweckmäßig ist es hierbei, wenn das Einsatzteil über eine Rastverbindung am Stutzen fixierbar ist.

Das Schirmkontaktelement läßt sich besonders günstig dadurch positionieren, daß dieses durch das an dem Einsatzteil sitzende Trägerteil am Einsatzteil gehalten ist.

Vorzugsweise ist dabei vorgesehen, daß das Trägerteil an dem Einsatzteil kraftschlüssig fixiert ist.

Der Kontaktbügel kann dabei prinzipiell die unterschiedlichsten Beweglichkeiten aufweisen. Besonders vorteilhaft ist es, wenn der Kontaktbügel in einer ungefähr parallel zu einer Längsachse der Kabelverschraubung verlaufenden Ebene bewegbar ist. Unter dieser Ebene ist die Ebene zu verstehen, in welcher sich der Kontaktbügel in allen durch die Bewegbarkeit bedingten Stellungen erstreckt.

Prinzipiell wäre es ausreichend, wenn das Schirmkontaktelement einen einzigen Kontaktbügel aufweist. Besonders vorteilhaft ist es jedoch, wenn das Schirmkontaktelement mehrere Kontaktbügel aufweist, welche beispielsweise in konstanten Winkelabständen um die Längsachse der Kabelverschraubung herum angeordnet sind.

Hinsichtlich der Herstellung einer elektrischen Verbindung zwischen dem Kontaktbügel und dem Stutzen sind die unterschiedlichsten Lösungen denkbar. So wäre es beispielsweise denkbar, daß der Kontaktbügel über ein diesen tragendes Element mit dem Stutzen elektrisch verbunden ist.

Noch vorteilhafter ist es jedoch, wenn der Kontaktbügel den Stutzen mit einer zweiten Kontaktstelle unmittelbar kontaktiert, so daß eine möglichst direkte Verbindung zwischen dem Kabelschirm und dem Stutzen herstellbar ist.

Besonders vorteilhaft ist es dabei, wenn der Kontaktbügel eine knieähnliche Umbiegung aufweist, die zwischen der ersten und der zweiten Kontaktstelle liegt.

Die knieähnliche Umbiegung läßt sich besonders vorteilhaft zur Erzeugung einer Federwirkung ausnutzen, nämlich dadurch, daß der Kontaktbügel zumindest im Bereich der knieähnlichen Umbiegung aus einem federelastischen Material hergestellt ist.

Eine derartige knieähnliche Umbiegung dient dann in vorteilhafter Weise dazu, den Kontaktbügel sowohl im Bereich der ersten Kontaktstelle als auch im Bereich der zweiten Kontaktstelle mit ausreichender Kraft zur Herstellung eines guten elektrischen Kontakts an dem Kabelschirm bzw. dem Stutzen anzulegen.

Um ein einfaches Einschieben des Kabels mit entferntem Kabelmantel, jedoch mit noch den Innenleiterbereich umschließendem und auf diesem aufliegendem Kabelschirm bei Erzeugung eines möglichst guten elektrischen Kontakts im Bereich der ersten Kontaktstelle zu erreichen, ist vorzugsweise vorgesehen, daß der Kontaktbügel im Bereich der ersten Kontaktstelle eine kufenähnliche Umbiegung aufweist, welche ein durch den Kontaktbügel bedingtes Ablösen des Kabelschirms beim Einschieben desselben verhindert.

Um ferner einen möglichst guten elektrischen Kontakt im Bereich der zweiten Kontaktstelle zu erhalten, ist vorzugsweise vorgesehen, daß der Kontaktbügel im Bereich der zweiten Kontaktstelle eine Umbiegung aufweist, welche dazu dient, auch bei geringen Anpresskräften einen möglichst guten elektrischen Kontakt durch eine möglichst kleine Kontaktfläche zu erhalten.

Im Zusammenhang mit der bisherigen Beschreibung der einzelnen Ausführungsbeispiele wurde lediglich darauf eingegangen, daß das Schirmkontaktelement einen oder mehrere Kontaktbügel aufweist. Besonders vorteilhaft ist es jedoch, wenn das Schirmkontaktelement ein Trägerteil aufweist, an welchem die Kontaktbügel gehalten sind.

Vorzugsweise ist dabei das Trägerteil als in Form eines Rings gebogenes Teil ausgebildet. Besonders zweckmäßig herstellbar, insbesondere zusammen mit den Kontaktbügeln, ist das Trägerteil dann, wenn es aus einem Flachmaterialstreifen gebogen ist, welcher die Form eines offenen Rings aufweist.

Ein hinsichtlich der Ausbildung des Schirmkontaktelements besonders vorteilhaftes Ausführungsbeispiel sieht vor, daß der Kontaktbügel relativ zum Trägerteil bewegbar ist und daß das Trägerteil relativ zum Stutzen fixiert angeordnet ist. Ein derartiges Schirmkontaktelement hat den Vorteil, daß einerseits über das Trägerteil die Möglichkeit besteht, die Kontaktbügel exakt im Stutzen zu positionieren, andererseits die Kontaktbügel relativ zum Trägerteil in ausreichendem Maße beweglich sind, um auch bei variierender Dicke der Kabel stets einen guten elektrischen Kontakt zwischen dem Kabelschirm und dem Stutzen herzustellen.

Ein besonders vorteilhaftes Ausführungsbeispiel sieht vor, daß das Trägerteil im Abstand von einer Innenwand des Stutzens liegt und der Kontaktbügel von dem Trägerteil ausgehend zu einer und dann zur anderen Kontaktstelle verläuft, so daß der Kontaktbügel ausgehend von dem Trägerteil sowohl in Richtung der Innenwand des Stutzens als auch in Richtung des Kabelschirms ausreichend Bewegungsraum aufweist, um unterschiedliche Abmessungen durch elastische Deformation auszugleichen.

Die erfindungsgemäße Kabelverschraubung kann hinsichtlich der Ausbildung der Dichtung in unterschiedlichster Art und Weise ausgeführt sein. So ist es beispielsweise denkbar, als Druckelement eine Druckschraube und als Dichtung eine durch Pressung in axialer Richtung deformierbare und an einem einen Durchlaß durchsetzenden Kabel zur Anlage bringbare Dichtung einzusetzen.

Alternativ dazu ist bei einem vorteilhaften Ausführungsbeispiel vorgesehen, daß in einem Inneren des Stutzens ein Dichtungsträger mit einem an diesem gehaltenen Lamellenkorb eingesetzt ist und daß in dem Lamellenkorb eine Dichtung liegt.

In diesem Fall ist das Druckelement vorzugsweise als den Lamellenkorb übergreifende Hutmutter ausgebildet, welche auf den Lamellenkorb so einwirkt, daß dieser die Dichtung in Richtung einer Längsachse der Kabelverschraubung verpreßt, um die Dichtung an einem Kabelaußenmantel des hindurchgeführten Kabels zur Anlage zu bringen.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine perspektivische, teilweise aufgeschnittene Darstellung eines Ausführungsbeispiels der erfindungsgemäßen Kabelverschraubung und
- Fig. 2: einen halbseitigen Längsschnitt durch das in Fig. 1 dargestellte Ausführungsbeispiel.

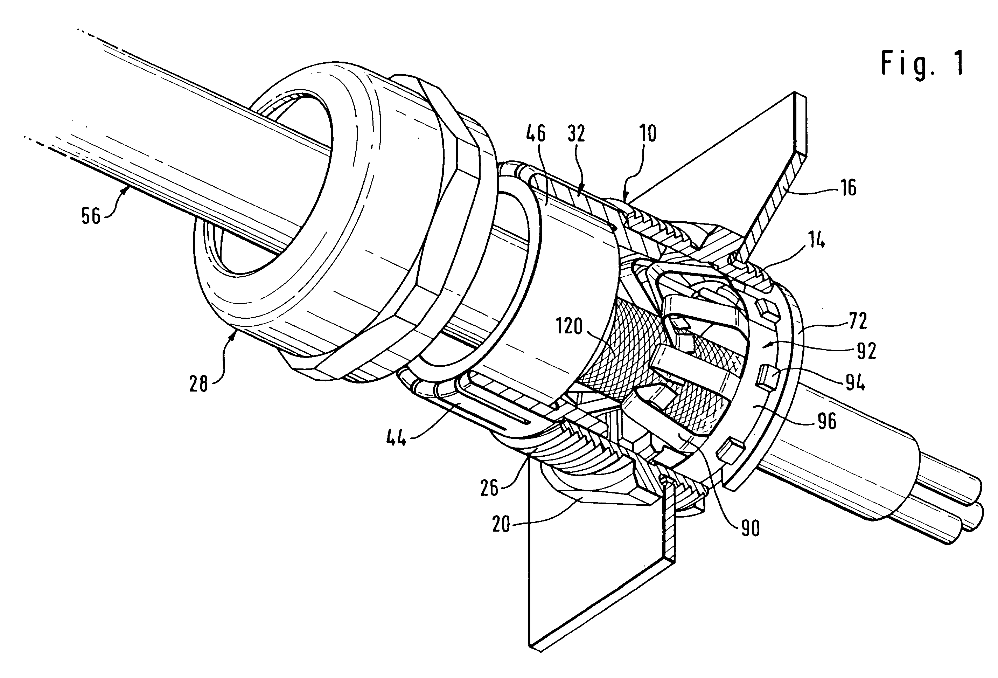

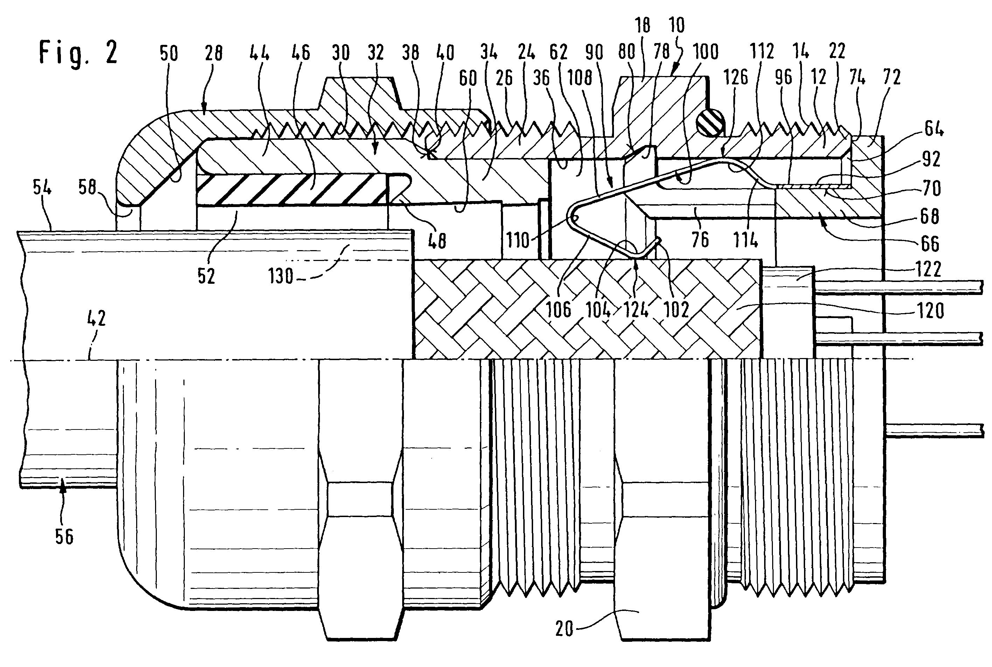

Ein in Fig. 1 und 2 dargestelltes Ausführungsbeispiel einer erfindungsgemäßen Kabelverschraubung umfaßt einen als Ganzes mit 10 bezeichneten elektrisch leitend ausgebildeten Stutzen, welcher einen zylindrischen Ansatz 12 mit einem Außengewinde 14 aufweist, mit welchem der Stutzen 10 in eine Wand 16 beispielsweise eines Gehäuses einschraubbar ist.

Der Stutzen umfaßt ferner einen Schlüsselflächenabschnitt 18, welcher mit Schlüsselflächen 20 versehen ist und auf einer einem gehäuseseitigen Ende 22 des zylindrischen Ansatzes 12 gegenüberliegenden Seite unmittelbar an den zylindrischen Ansatz 12 anschließt.

Auf einer dem zylindrischen Ansatz 12 gegenüberliegenden Seite des Schlüsselflächenabschnitts 18 des Stutzens 10 ist ein Zylinderabschnitt 24 vorgesehen, welcher ein Außengewinde 26 trägt. Auf das Außengewinde 26 ist eine als Ganzes mit 28 bezeichnete Hutmutter 28 mit ihrem Innengewinde 30 aufschraubbar.

Der Zylinderabschnitt 24 dient zur Aufnahme eines als Ganzes mit 32 bezeichneten Dichtungsträgers welcher mit einem Halteansatz 34 in den Zylinderabschnitt 24 eingreift und an einer inneren Zylinderfläche 36 desselben geführt ist. Ferner stützt sich der Dichtungsträger 32 mit einer Flanschfläche 38 auf einer dem Schlüsselflächenabschnitt 18 abgewandten Stirnseite 40 der Zylinderabschnitts 24 ab und ist dadurch in Richtung einer Längsachse 42 der erfindungsgemäßen Kabelverschraubung gegen eine Verschiebung in Richtung des Schlüsselflächenabschnitts 18 fixiert.

Der Dichtungsträger 32 umfaßt ferner einen Lamellenkorb 44, der seinerseits eine Dichtung 46 umschließt, wobei die Dichtung 46 ferner durch einen inneren Ansatz 48 gegen eine Verschiebung in Richtung der Längsachse 42 zum Schlüsselflächenabschnitt 18 hin fixierbar ist.

Der Lamellenkorb 44 ist seinerseits durch eine Schrägfläche 50 der Hutmutter 28 beaufschlagbar, welche bei zunehmendem Aufschrauben der Hutmutter 28 auf das Außengewinde 26 die Lamellen des Lamellenkorbs 44 zunehmend in Richtung der Längsachse 42 deformiert und damit die in dem Lamellenkorb 44 aufgenommene Dichtung 46 ebenfalls soweit in Richtung der Längsachse 42 bewegt, daß ein innerer Durchlaß 52 an einer Kabelaußenmantelfläche 54 eines Kabels 56 dichtend mit Pressung anlegbar ist.

Das Kabel 56 verläuft dabei durch eine zur Längsachse 42 koaxiale Öffnung 58 der Hutmutter 28, dann durch den Durchlaß 52 der Dichtung 46 hindurch und passiert dann einen inneren Durchbruch 60 des Dichtungsträgers 32. Im Anschluß an den Dichtungsträger 32 erstreckt sich das Kabel 56 durch einen Innenraum 62 des Stutzens 10, welcher sich ausgehend vom Zylinderabschnitt 24 durch den Schlüsselflächenabschnitt 18 und den zylindrischen Ansatz 12 bis zu einer gehäuseseitigen Öffnung 64 des Stutzens ausdehnt. Von der gehäuseseitigen Öffnung 64 ausgehend erstreckt sich in dem Innenraum 62 ein als Ganzes mit 66 bezeichnetes Einsatzteil, welches einen Ringkörper 68 mit einer radial außenliegenden zylindrischen Fläche 70 und einen über die zylindrische Fläche 70 radial nach außen reichenden Flansch 72 aufweist, welcher an einer Stirnfläche 74 des gehäuseseitigen Endes 22 des Stutzens 10 anliegt.

Das Einsatzteil 66 weist ferner von dem Innenkörper 68 ausgehende und sich in Richtung der Längsachse 42 erstreckende Finger 76 auf, welche mit einer bezüglich der Längsachse 42 radial nach außen stehenden Rastnase 78 in eine vorzugsweise im Bereich des Schlüsselflächenabschnitts 18 liegende und sich ausgehend von der inneren Zylinderfläche 36 radial nach außen erstreckende Nut 80 im Stutzen 10 eingreift.

Das Einsatzteil 66 ist somit vom gehäuseseitigen Ende 22 her in den Innenraum 62 des Stutzens 10 einschiebbar, wobei die Finger 76 elastisch in Richtung der Längsachse 42 verbiegbar sind, so daß die Nasen 78 derselben auf der inneren zylindrischen Fläche 36 von der Öffnung 64 bis zur Nut 80 entlanggleiten und dann in die Nut 80 eingreifen und somit eine Rastverbindung mit dieser bilden, während gleichzeitig der Flansch 72 am gehäuseseitigen Ende 22 des Stutzens 10 anliegt.

Das Einsatzteil 66 trägt ein als Ganzes mit 90 bezeichnetes Schirmkontaktelement, welches mit einem in Form eines offenen Rings ausgebildeten Trägerteil 92 auf der zylindrischen Fläche 70 des Ringkörpers 68 aufliegt, wobei das Trägerteil 92 ein zu einem offenen Ring gebogener Flachmaterialstreifen ist. Zur Fixierung des Trägerteils 92 auf der Zylinderfläche 70 wird das Trägerteil 92 von von dem Flansch 72 vorspringenden Vorsprüngen 94 gehalten, welche das Trägerteil 92 auf einer der zylindrischen Fläche 70 abgewandten Außenseite 96 übergreifen, so daß das Trägerteil in einem zwischen den Vorsprüngen 94 und der zylindrischen Fläche 70 gebildeten Schlitz fixiert ist.

Von dem Trägerteil 92 erstrecken sich zwischen den Fingern 76 liegende Kontaktbügel 100, welche ein dem Trägerteil 92 abgewandtes Ende 102 mit einer V-förmigen Umbiegung 104 aufweisen, welche an einem ersten Bügelarm 106 angeordnet ist. Der erste Bügelarm 106 und ein zweiter Bügelarm 108 sind über eine knieähnliche Umbiegung 110 miteinander verbunden. Der zweite Bügelarm 108 schließt sich an eine umgekehrt V-förmige Umbiegung 112 an und diese liegt zwischen einem dritten, vom Trägerteil 92 bezüglich der Längsachse 42 radial nach außen wegführenden Bügelarm 114 und dem zweiten Bügelarm 108.

Jeder Kontaktbügel 100 dient zur Herstellung eines elektrischen Kontakts zwischen einem Kabelschirm 120, welcher auf einem Innenleiterbereich 122 des Kabels 56 und diesen umschließend anliegt. Unter dem Innenleiterbereich 122 werden alle von dem Kabelschirm 120 umschlossenen Unterbestandteile verstanden. Hierzu berührt der Kontaktbügel 100 mit der V-förmigen Umbiegung 104 den Kabelschirm 120 mit einer ersten Kontaktstelle 124. Ferner erstreckt sich jeder Kontaktbügel 100 vorzugsweise in einer durch die Längsachse 42 hindurch verlaufenden Ebene und ist in der Ebene liegend federnd bewegbar, wobei die Bügelarme 106, 108 und 114 in der Ebene liegend verbleiben.

Ferner berührt der Kontaktbügel 100 den Stutzen 10 im Bereich seiner inneren zylindrischen Fläche 36 mittels der umgekehrt V-förmigen Umbiegung 112 unter Bildung einer zweiten Kontaktstelle 126. Aufgrund der Form des Kontaktbügels 100 liegt zwischen der ersten Kontaktstelle 124 und der zweiten Kontaktstelle 126 die knieähnliche Umbiegung 110 mit dem von dieser wegführenden ersten Bügelarm 106 und dem zweiten Bügelarm 108, welche bei elastischem Material des Kontaktbügels eine Federwirkung entfaltet, die einerseits die Umbiegung 104 gegen den Kabelschirm 120 und andererseits die Umbiegung 112 gegen die innere zylindrische Fläche 36 des Stutzens 10 drückt und somit auch den elektrischen Kontakt im Bereich der ersten Kontaktstelle 124 und der zweiten Kontaktstelle 126 aufrecht erhält.

Dadurch, daß der dritte Bügelarm 114 von dem Trägerteil 92 radial nach außen bis zur umgekehrt V-förmigen Umbiegung 112 verläuft, bildet sich auch zwischen dem Trägerteil 92 und der Umbiegung 112 ein Hebelarm, welcher eine federnde Bewegung der Umbiegung 112 in Richtung der inneren zylindrischen Fläche 36 des Stutzens 10 zuläßt, so daß durch die Ausbildung des Kontaktbügels 100 aus federelastischem Material sowohl ein Kontakt im Bereich der ersten Kontaktstelle 124 als auch ein Kontakt im Bereich der zweiten Kontaktstelle 126 stets aufrechterhalten wird.

Bei der erfindungsgemäßen Kabelverschraubung ist es somit lediglich erforderlich, einen Kabelaußenmantel 130 soweit zu entfernen, daß der den Innenleiterbereich 122 umschließende Kabelschirm 120 freigelegt ist, jedoch noch nach wie vor den Innenleiterbereich 122 eng umschließt. Wird ein derart von dem Kabelaußenmantel 130 teilweise befreites Kabel 56 in die erfindungsgemäße Kabelverschraubung eingeschoben und zwar so weit, daß der freigelegte Kabelschirm 120 im Bereich des Innenraums 62 liegt, so wird automatisch mittels der mehreren Kontaktbügel 100 ein elektrischer Kontakt zwischen dem Kabelschirm 120 und dem Stutzen 10 hergestellt. Vorzugsweise wird dabei das Kabel 56 so weit eingeschoben, daß der mit dem Kabelaußenmantel 130 noch versehene Bereich im Durchlaß 52 der Dichtung 46 liegt, so daß durch Anziehen der Hutmutter 28 die Dichtung 46 zur Anlage an der Kabelaußenmantelfläche 54 bringbar und somit das Kabel 56 in der Kabelverschraubung einerseits abgedichtet und andererseits zumindest kraftschlüssig zugentlastet fixierbar ist, während gleichzeitig ein elektrischer Kontakt zwischen dem Kabelschirm 120 und dem Stutzen 10 über die Kontaktbügel 100 herstellbar ist.

## Patentansprüche

1. Kabelverschraubung umfassend einen mit einem Gehäuse verbindbaren Stutzen (10), eine in ein Inneres des Stutzens (10) einsetzbare Dichtung (46) sowie ein mit dem Stutzen (10) verschraubbares Druckelement (28), welches auf die Dichtung (46) im Sinne eines Anlegens derselben an ein durch die Kabelverschraubung hindurchführbares Kabel (56) einwirkt, ein in dem Stutzen (10) angeordnetes Schirmkontaktelement (90), welches in elektrischer Verbindung mit dem Stutzen (10) steht und mittels mindestens eines in Richtung des hindurchführbaren Kabels (56) reichenden Kontaktbügels (100) einen einen Innenleiterbereich (122) des Kabels (56) umschließenden Kabelschirm (120) mit einer ersten Kontaktstelle (124) zu kontaktieren vermag,
**dadurch gekennzeichnet,** daß der Stutzen (10) eine gehäuseseitige Öffnung (64) aufweist, daß das Schirmkontaktelement (90) unabhängig von der Dichtung (46) von einem gehäuseseitigen Ende (22) des Stutzens (10) in diesen einsetzbar und in elektrischen Kontakt mit dem Stutzen (10) bringbar ist, und daß das Schirmkontaktelement (90) in dem Stutzen (10) lokal fixierbar ist.

2. Kabelverschraubung nach Anspruch 1, dadurch gekennzeichnet, daß das Schirmkontaktelement (90) über eine Rastverbindung am Stutzen (10) lokal fixierbar ist.

3. Kabelverschraubung nach einem der voranstehenden Ansprüche, dadurch gekennzeichnet, daß das Schirmkontaktelement (90) an einem in den Stutzen (10) einführbaren Einsatzteil (66) gehalten ist.

4. Kabelverschraubung nach Anspruch 3, dadurch gekennzeichnet, daß das Einsatzteil (66) von einem gehäuseseitigen Ende (22) der Stutzens (10) in diesen einsetzbar ist.

5. Kabelverschraubung nach Anspruch 3 oder 4, dadurch gekennzeichnet, daß das Schirmkontaktelement (90) mittels des Einsatzteils (66) in dem Stutzen (10) lokal fixierbar ist.

6. Kabelverschraubung nach Anspruch 5, dadurch gekennzeichnet, daß das Einsatzteil (66) über eine Rastverbindung (78, 80) am Stutzen (10) fixierbar ist.

7. Kabelverschraubung nach einem der Ansprüche 3 bis 6, dadurch gekennzeichnet, daß das Schirmkontaktelement (90) durch das an dem Einsatzteil (66) sitzende Trägerteil (92) am Einsatzteil gehalten ist.

8. Kabelverschraubung nach einem der voranstehenden Ansprüche, dadurch gekennzeichnet, daß der Kontaktbügel (100) in einer ungefähr parallel zu einer Längsachse (42) der Kabelverschraubung verlaufenden Ebene bewegbar ist.

9. Kabelverschraubung nach einem der voranstehenden Ansprüche, dadurch gekennzeichnet, daß das Schirmkontaktelement (90) mehrere Kontaktbügel (100) aufweist.

10. Kabelverschraubung nach einem der voranstehenden Ansprüche, dadurch gekennzeichnet, daß der Kontaktbügel (100) den Stutzen (10) mit einer zweiten Kontaktstelle (126) unmittelbar kontaktiert.

11. Kabelverschraubung nach einem der voranstehenden Ansprüche, dadurch gekennzeichnet, daß der Kontaktbügel (100) eine knieähnliche Umbiegung (110) aufweist, die zwischen der ersten (124) und der zweiten (126) Kontaktstelle liegt.

12. Kabelverschraubung nach einem der voranstehenden Ansprüche, dadurch gekennzeichnet, daß der Kontaktbügel (100) im Bereich der ersten Kontaktstelle (124) eine Umbiegung (104) aufweist.

13. Kabelverschraubung nach einem der voranstehenden Ansprüche, dadurch gekennzeichnet, daß der Kontaktbügel (100) im Bereich der zweiten Kontaktstelle (126) eine Umbiegung (112) aufweist.

14. Kabelverschraubung nach einem der voranstehenden Ansprüche, dadurch gekennzeichnet, daß das Schirmkontaktelement (90) ein Trägerteil (92) aufweist, an welchem die Kontaktbügel (100) gehalten sind.

15. Kabelverschraubung nach Anspruch 14, dadurch gekennzeichnet, daß der Kontaktbügel (100) relativ zum Trägerteil (92) bewegbar ist und daß das Trägerteil (92) relativ zum Stutzen (10) fixiert angeordnet ist.

16. Kabelverschraubung nach Anspruch 14 oder 15, dadurch gekennzeichnet, daß das Trägerteil (92) im Abstand von einer Innenwand (36) des Stutzens (10) liegt und daß der Kontaktbügel von dem Trägerteil (92) ausgehend zu einer (124) und dann zur anderen (126) Kontaktstelle verläuft.

## Claims

1. A cable gland comprising a connecting piece (10) which is connectable to a housing, a seal (46) which is insertable into the interior of the connection piece (10) and a compression element (28) which is adapted to be screwed onto the connection piece (10) and is effective on the seal (46) in the sense of causing the latter to be pressed against a cable (56) which is insertable through the cable gland, a screen contact element (90) which is arranged in the connection piece (10), is in electrical contact with the connection piece (10) and enables a cable screen (120) surrounding an inner conductor region (122) of the cable (56) to make contact with a first contact point (124) by means of at least one sliding bow contact (100) which extends towards the insertable cable (56),
characterised in that the connection piece (10) comprises an opening (64) at the housing-side end, that the screen contact element (90) is insertable into the connection piece (10) from a housing-side end (22) thereof independently of the seal (46) and is adapted to be brought into electrical contact with the connection piece (10), and in that the screen contact element (90) is fixable locally in the connection piece (10).

2. A cable gland in accordance with Claim 1, characterised in that the screen contact element (90) is fixable locally on the connection piece (10) by means of a snap-in connection.

3. A cable gland in accordance with any of the preceding Claims, characterised in that the screen contact element (90) is retained on an insert member (66) which is insertable into the connection piece (10) .

4. A cable gland in accordance with Claim 3, characterised in that the insert member (66) is insertable into the connection piece (10) from a housing-side end (22) thereof.

5. A cable gland in accordance with Claim 3 or 4, characterised in that the screen contact element (90) is fixable locally in the connection piece (10) by means of the insert member (66).

6. A cable gland in accordance with Claim 5, characterised in that the insert member (66) is fixable on the connection piece (10) by means of a snap-in connection (78, 80).

7. A cable gland in accordance with any of the Claims 3 to 6, characterised in that the screen contact element (90) is retained on the insert member (66) by means of a support member (92) resting on the insert member (66).

8. A cable gland in accordance with any of the preceding Claims, characterised in that the sliding bow contact (100) is moveable in a plane extending approximately parallel to a longitudinal axis (42) of the cable gland.

9. A cable gland in accordance with any of the preceding Claims, characterised in that the screen contact element (90) comprises a plurality of sliding bow contacts (100).

10. A cable gland in accordance with any of the preceding Claims, characterised in that the sliding bow contact (100) makes direct contact with the connection piece (10) at a second contact point (126).

11. A cable gland in accordance with any of the preceding Claims, characterised in that the sliding bow contact (100) has a knee-like bend (110) located between the first (124) and the second (126) contact point.

12. A cable gland in accordance with any of the preceding Claims, characterised in that the sliding bow contact (100) has a bend (104) in the region of the first contact point (124).

13. A cable gland in accordance with any of the preceding Claims, characterised in that the sliding bow contact (100) has a bend (112) in the region of the second contact point (126).

14. A cable gland in accordance with any of the preceding Claims, characterised in that the screen contact element (90) comprises a support portion (92) on which the sliding bow contacts (100) are mounted.

15. A cable gland in accordance Claim 14, characterised in that the sliding bow contact (100) is moveable relative to the support portion (92), and that the support portion (92) is fixed relative to the connection piece (10).

16. A cable gland in accordance with Claim 14 or 15, characterised in that the support portion (92) is spaced from an interior wall (36) of the connection piece (10), and in that the sliding bow contact extends away from the support portion (92) towards one (124) and then towards the other (126) contact point.

## Revendications

1. Passe-câble à vis comprenant une tubulure (10) susceptible d'être reliée à un boîtier, un joint d'étanchéité (46) susceptible d'être inséré à l'intérieur de la tubulure (10), ainsi qu'un élément de pressage (28) susceptible d'être vissé à la tubulure (10), l'élément de pressage agissant sur le joint d'étanchéité (46) dans le sens de l'application de celui-ci sur un câble (56) susceptible d'être passé à travers le passe-câble à vis, un élément de contact au blindage (90) disposé dans la tubulure (10), qui est en liaison électrique avec la tubulure (10) et permet de mettre en contact un blindage de câble (120), entourant une zone à conducteurs intérieurs (122) du câble (56) à un premier point de contact (124), à l'aide d'au moins un étrier de contact (100) allant dans la direction du câble (56) susceptible d'être guidé, caractérisé en ce que la tubulure (10) présente une ouverture (58) située côté boîtier, en ce que l'élément de contact au blindage (90), indépendamment du joint d'étanchéité (46), est susceptible d'être inséré depuis une extrémité (22) située côté boîtier de la tubulure (10), dans celle-ci, et est susceptible d'être mis en contact électrique avec la tubulure (10), et en ce que l'élément de contact au blindage (90) est susceptible d'être fixé localement dans la tubulure (10).

2. Passe-câble à vis selon la revendication 1, caractérisé en ce que l'élément de contact au blindage (90) est susceptible d'être fixé localement à la tubulure (10), par l'intermédiaire d'une liaison à encliquetage.

3. Passe-câble à vis selon l'une des revendications précédentes, caractérisé en ce que l'élément de contact au blindage (90) est maintenu à une pièce d'insertion (66) susceptible d'être introduite dans la tubulure (10).

4. Passe-câble à vis selon la revendication 3, caractérisé en ce que la pièce d'insertion (66) est susceptible d'être insérée depuis une extrémité (22), située côté boîtier, de la tubulure (10), dans celle-ci.

5. Passe-câble à vis selon la revendication 3 ou 4, caractérisé en ce que l'élément de contact au blindage (90) est susceptible d'être fixé localement dans la tubulure (10) au moyen de la pièce d'insertion (66).

6. Passe-câble à vis selon la revendication 5, caractérisé en ce que la pièce d'insertion (65) est susceptible d'être fiée sur la tubulure (10) par l'intermédiaire d'une liaison à encliquetage (78, 80).

7. Passe-câble à vis selon l'une des revendications 3 à 6, caractérisé en ce que l'élément de contact au blindage (90) est maintenu à -la pièce d'insertion au moyen de la partie support (92) montée sur la pièce d'insertion (66) .

8. Passe-câble à vis selon l'une des revendications précédentes, caractérisé en ce que l'étrier de contact (100) est déplaçable dans un plan s'étendant à peu près parallèlement à un axe longitudinal (42) du passe-câble à vis.

9. Passe-câble à vis selon l'une des revendications précédentes, caractérisé en ce que l'élément de contact au blindage (90) présente une pluralité d'étriers de contact (100).

10. Passe-câble à vis selon l'une des revendications précédentes, caractérisé en ce que l'étrier de contact (100) met en contact directement la tubulure (10) avec un deuxième point de contact (126).

11. Passe-câble à vis selon l'une des revendications précédentes, caractérisé en ce que l'étrier de contact (100) présente un coudage (110) analogue à un genou, situé entre le premier point de contact (124) et le deuxième point de contact (126).

12. Passe-câble à vis selon l'une des revendications précédentes, caractérisé en ce que l'étrier de contact (100) présente un coudage (104) dans la zone du premier point de contact (124).

13. Passe-câble à vis selon l'une des revendications précédentes, caractérisé en ce que l'étrier de contact (100) présente un coudage (112) dans la zone du deuxième point de contact (126).

14. Passe-câble à vis selon l'une des revendications précédentes, caractérisé en ce que l'élément de contact au blindage (90) présente une partie support (92) sur laquelle les étriers de contact (100) sont maintenus.

15. Passe-câble à vis selon la revendication 14, caractérisé en ce que l'étrier de contact (100) est déplaçable par rapport à la partie support (92), et en ce que la partie support (92) est disposée en étant fixée par rapport à la tubulure (10).

16. Passe-câble à vis selon la revendication 14 ou 15, caractérisé en ce que la partie support (92) est située à distance d'une paroi intérieure (36) de la tubulure (10), et en ce que l'étrier de contact s'étend en partant de la partie support (92), vers un point de contact (124) puis vers l'autre point de contact (126).
